# EUROPEAN PATENT SPECIFICATION

(11) **EP 3 777 026 B1**
(45) Date of publication and mention of the grant of the patent: **07.12.2022**
(21) Application number: 19753524.8
(22) Date of filing: 26.07.2019
(51) Int. Cl.: H04L 9/00

(54) **MULTI-LEVEL STORAGE METHOD AND APPARATUS FOR BLOCKCHAIN DATA**
VERFAHREN UND VORRICHTUNG ZUR MEHRSTUFIGEN SPEICHERUNG VON BLOCKCHAIN-DATEN
PROCÉDÉ DE STOCKAGE À NIVEAUX MULTIPLES ET APPAREIL DESTINÉ À DES DONNÉES DE CHAÎNE DE BLOCS

(30) Priority: 27.07.2018 CN 201810847133
(43) Date of publication of application: 17.02.2021
(73) Proprietor: Advanced New Technologies Co., Ltd., George Town, Grand Cayman KY1-9008 (KY)
(72) Inventor: WANG, Shifeng, Hangzhou, Zhejiang 310000 (CN)
(74) Representative: Fish & Richardson P.C.
(86) International application number: PCT/US2019/043604
(87) International publication number: WO 2020/023843

(56) References cited:
- CN-A- 106 598 500
- CN-A- 107 193 500
- CN-A- 107 704 196
- DAI MINGJUN ET AL: "A Low Storage Room Requirement Framework for Distributed Ledger in Blockchain", IEEE ACCESS, vol. 6, 1 May 2018 (2018-05-01), pages 22970-22975, XP011683711, DOI: 10.1109/ACCESS.2018.2814624 [retrieved on 2018-05-14]
- SHENG WANG ET AL: "ForkBase: An Efficient Storage Engine for Blockchain and Forkable Applications", ARXIV.ORG, CORNELL UNIVERSITY LIBRARY, 201 OLIN LIBRARY CORNELL UNIVERSITY ITHACA, NY 14853, 14 February 2018 (2018-02-14), XP080856630,

## Description

### TECHNICAL FIELD

The present specification relates to the field of network communications technologies, and in particular, to a multi-level storage method and apparatus for blockchain data.

### BACKGROUND

A blockchain technology, also referred to as a distributed ledger technology, is an emerging technology in which several computing devices jointly participate in "accounting" and jointly maintain a complete distributed database. The blockchain technology is characterized by decentralization and transparency. Each computing device can participate in database recording as a node device of a blockchain, and computing devices can implement rapid data synchronization. Various node devices of the blockchain usually need to process a consensus operation, a verification operation, and a read/write operation with high concurrency in a blockchain system. As the number of blocks "entered in the ledger" increases, incremental block data storage gradually affects a response speed of a storage device and further affects the efficiency of the node devices in responding to the consensus operation, the verification operation, and the read/write operation with high concurrency.
CN 107 193 500 A describes a distributive file system hierarchical storage method and system. The method comprises the following steps of when data to be stored is received, storing the data to be stored into a hot data storage disk under the first layer storage directory; periodically detecting the number of access times of the first storage data in the hot data storage disk; when the number of the access times of the first storage data is smaller than a preset first heat threshold value, migrating the first storage data into a cold data storage disk in the second layer storage directory; and when the proportion of the data stored in the cold data storage disk in the storage volume of the cold data storage disk exceeds the preset proportion threshold value, backing up the second storage data meeting the preset rule in a backup disk in the third layer storage directory. By using the method provided by the embodiment, data of different access quantities is stored in different layers; the use cost of the disks is controlled; and the data storage flow process of a distributive file system is simplified.
CN 106 598 500 A describes a hierarchical storage dynamic migration method. The method comprises the following steps: S1, detecting the capacity of a first storage layer in real time; step S2.1, judging whether the capacity of the first storage layer is higher than a preset upper limit capacity threshold value; S3.1, emigrating an emigration target file in the first storage layer to a second storage layer at the first emigration execution time if the capacity of the first storage layer is higher than the preset upper limit capacity threshold value; otherwise returning to step S1; S4.1, judging whether the capacity of the first storage layer is lower than a first preset target capacity; S5.1, continuously emigrating the emigration target file in the first storage layer to the second storage layer at the second emigration execution time after passing the emigration idle time if the capacity of the first storage layer is lower than the first preset target capacity; S6.1, repeating step S4.1 and S5.1 until the capacity of the first storage layer is lower than the first preset target capacity. By use of the method disclosed by the invention, the stability of the system is guaranteed, and the hotspot data can be sufficiently excavated.

### SUMMARY

The invention is defined by the appended claims. For the previous problems, the present specification provides a multi-level storage method for blockchain data, where block data of the blockchain is stored in a multi-level storage system interconnected to the blockchain, the multi-level storage system includes the first-level storage system configured to store the latest block data of the blockchain, and at least one lower-level storage system configured to archive block data stored in the first-level storage system, and the method includes: receiving the latest block data of the blockchain, and storing the latest block data in the first-level storage system in the multi-level storage system; determining whether a block data migration event for the first-level storage system is triggered; and if yes, migrating at least a part of block data stored in the first-level storage system to the lower-level storage system.

Preferably, a single-chain connection way is used between various storage systems in the multi-level storage system.

Preferably, storage performance of a storage medium corresponding to the first-level storage system is higher than storage performance of a storage medium corresponding to the lower-level storage system.

Preferably, storage performance of storage media corresponding to various levels of storage systems in the multi-level storage system decreases in a gradient from the first-level storage system.

Preferably, the method further includes: determining whether any one of the lower-level storage systems receives the at least a part of block data migrated from the upper-level storage system; if yes, determining whether a block data migration event for the any one of the lower-level storage systems is triggered; and if yes, continuing migrating at least a part of block data stored in the any one of the lower-level storage systems to a lower-level storage system of the any one of the lower-level storage systems.

Preferably, the block data migration event for the first-level storage system includes: a data capacity of the block data stored in the first-level storage system exceeds a predetermined threshold, or a capacity ratio of a data capacity of the block data stored in the first-level storage system to a total data capacity of the first-level storage system exceeds a predetermined threshold.

Preferably, the block data migration event for the any one of the lower-level storage systems includes: a data capacity of block data stored in the any one of the lower-level storage systems exceeds a predetermined threshold, or a capacity ratio of a data capacity of block data stored in the any one of the lower-level storage systems to a total data capacity of the any one of the lower-level storage systems exceeds a predetermined threshold.

Correspondingly, the present specification further provides a multi-level storage apparatus for blockchain data, where block data of the blockchain is stored in a multi-level storage system interconnected to the blockchain, the multi-level storage system includes the first-level storage system configured to store the latest block data of the blockchain, and at least one lower-level storage system configured to archive block data stored in the first-level storage system, and the apparatus includes: a read/write unit, configured to receive the latest block data of the blockchain, and store the latest block data in the first-level storage system in the multi-level storage system; a determining unit, configured to determine whether a block data migration event for the first-level storage system is triggered; and a migration unit, configured to migrate at least a part of block data stored in the first-level storage system to the lower-level storage system if the determining unit determines that the block data migration event for the first-level storage system is triggered.

Preferably, a single-chain connection way is used between various storage systems in the multi-level storage system.

Preferably, storage performance of a storage medium corresponding to the first-level storage system is higher than storage performance of a storage medium corresponding to the lower-level storage system.

Preferably, storage performance of storage media corresponding to various levels of storage systems in the multi-level storage system decreases in a gradient from the first-level storage system.

Preferably, the determining unit is configured to determine whether any one of the lower-level storage systems receives the at least a part of block data migrated from the upper-level storage system; and if yes, determine whether a block data migration event for the any one of the lower-level storage systems is triggered; and the migration unit is configured to continue migrating at least a part of block data stored in the any one of the lower-level storage systems to a lower-level storage system of the any one of the lower-level storage systems if the determining unit of the lower-level storage system determines that the block data migration event for the any one of the lower-level storage systems is triggered.

Preferably, the block data migration event for the first-level storage system includes: a data capacity of the block data stored in the first-level storage system exceeds a predetermined threshold, or a capacity ratio of a data capacity of the block data stored in the first-level storage system to a total data capacity of the first-level storage system exceeds a predetermined threshold.

Preferably, the block data migration event for the any one of the lower-level storage systems includes: a data capacity of block data stored in the any one of the lower-level storage systems exceeds a predetermined threshold, or a capacity ratio of a data capacity of block data stored in the any one of the lower-level storage systems to a total data capacity of the any one of the lower-level storage systems exceeds a predetermined threshold.

Correspondingly, the present specification further provides a computer device, including a storage device and a processor. The storage device stores a computer program that can be run by the processor. When running the computer program, the processor performs steps in the previous blockchain data storage method.

The present specification further provides a computer-readable storage medium The computer-readable storage medium stores a computer program, and when the computer program is run by a processor, steps in the previous blockchain data storage method are performed.

According to the blockchain data storage method and apparatus, the computer device, and the computer storage medium provided in the present specification, at least a part of block data in the first-level storage system is migrated to a lower-level storage system in the multi-level storage system under triggering of a related migration trigger event, to release more storage space for the first-level storage system, so that the first-level storage system can better perform various data operations such as a consensus operation, a verification operation, and a read/write operation with high concurrency that are generated in the blockchain. Because of a tamper-resistant characteristic of the blockchain, data that has been recorded in a historical block cannot be deleted or modified, and operation of adding data to the historical block also cannot be performed. Only a read operation can be performed on block data migrated to a lower-level storage system in the multi-level storage system. Therefore, the previous lower-level storage system can be deployed by using a hardware device resource with a relatively low performance configuration, to reduce costs of the entire storage system.

### BRIEF DESCRIPTION OF DRAWINGS

FIG. 1 is a flowchart illustrating a multi-level storage method for blockchain data, according to an example implementation of the present specification;
FIG. 2 (a) is an architectural diagram illustrating a multi-level storage system, according to an example implementation of the present specification;
FIG. 2 (b) is an architectural diagram illustrating a multi-level storage system, according to another example implementation of the present specification;
FIG. 3 is a schematic diagram illustrating a multi-level storage apparatus for blockchain data, according to an example implementation of the present specification; and
FIG. 4 is a structural diagram illustrating hardware for running an implementation of a multi-level storage method or apparatus for blockchain data, according to the present specification.

### DESCRIPTION OF IMPLEMENTATIONS

The "blockchain" described in the implementations provided in the present specification can be a P2P network system that is implemented by various node devices by using a consensus mechanism having a distributed data storage structure. Data in the blockchain is distributed within "blocks" that are connected in terms of time. The latter block includes a data digest of a previous block, and data of all or some nodes is fully backed up based on different consensus mechanisms (e.g., a Proof of Work (PoW), a Proof of Stake (PoS), a Delegated Proof of Stake (DPoS), or a Practical Byzantine Fault Tolerance (PBFT)). Various node devices (especially a full node device) of the blockchain usually need to process a consensus operation, a verification operation, and a read/write operation with high concurrency in a blockchain system. As the number of blocks "entered in the ledger" increases, incremental block data storage gradually affects a response speed of a storage device, and further affects the efficiency of the node devices in responding to the consensus operation, the verification operation, and the read/write operation with high concurrency.

The present specification aims to provide a multi-level storage method or apparatus for blockchain data. Block data of the blockchain is stored in a multi-level storage system interconnected to the blockchain. The multi-level storage system includes the first-level storage system configured to store the latest block data of the blockchain, and at least one lower-level storage system configured to archive block data stored in the first-level storage system.

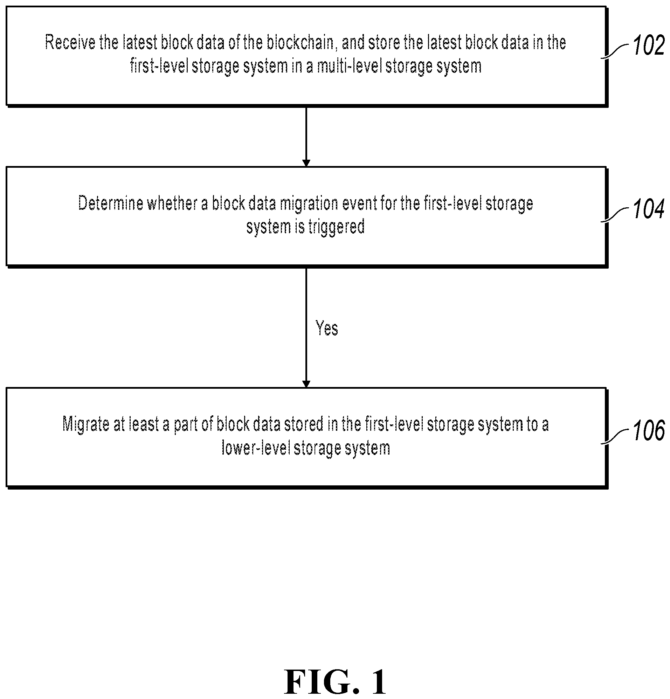

FIG. 1 is a flowchart illustrating a multi-level storage method for blockchain data, according to an example implementation of the present specification, and the method includes the following steps:
Step 102: Receive the latest block data of the blockchain, and store the latest block data in the first-level storage system in a multi-level storage system.
Step 104: Determine whether a block data migration event for the first-level storage system is triggered.

If yes, the following step 106 is performed: migrate at least a part of block data stored in the first-level storage system to a lower-level storage system.

The first-level storage system in the previous implementation is configured to store the latest block data of the blockchain. In addition, the first-level storage system can be further configured to process a data operation service (including a consensus operation, a verification operation, and a read/write operation performed on the block data) related to the generation of the latest block data in the blockchain. Due to multi-node and high-concurrency service demands of the blockchain, a storage medium with high storage performance (e.g., high bandwidth, a high processing rate, and large capacity) is usually selected for the first-level storage system. As more blocks are packaged in the blockchain, remaining storage space in the first-level storage system gradually decreases, and a data processing capability of the first-level storage system such as a capability of performing consensus, verification, and read/write on the block data gradually decreases. Therefore, the storage system needs to migrate at least a part of block data in the first-level storage system to a lower-level storage system of the first-level storage system in the multi-level storage system.

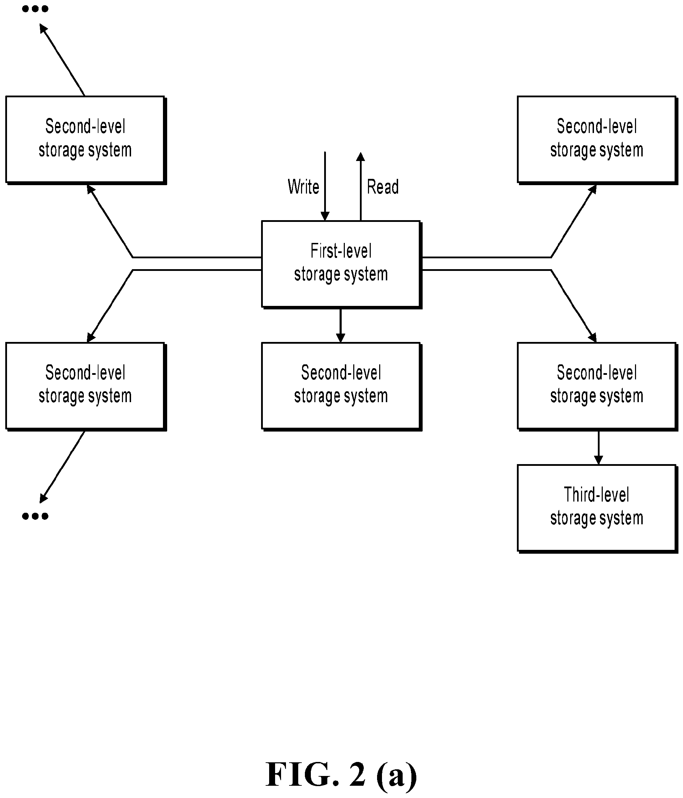

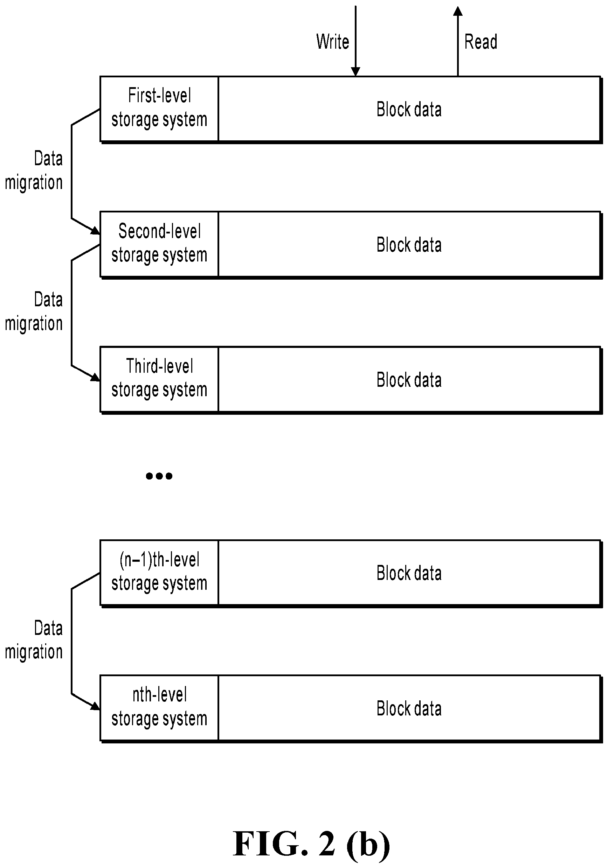

The multi-level storage system in the previous implementation can be in several architectural forms. FIG. 2 (a) and FIG. 2 (b) show two possible architectural forms of the multi-level storage system provided in the present specification. In FIG. 2 (a), the first-level storage system has a number of lower-level storage systems, such as second-level storage systems shown in FIG. 2(a). Block data in the first-level storage system can be separately migrated to different second-level storage systems based on settings of the storage system. In addition, the second-level storage systems can be further connected to several third-level storage systems based on specific blockchain data storage demands. Implementations are not limited in the present specification. The storage system shown in FIG. 2 (b) is a multi-level storage system that starts from the previously described first-level storage system and in which a number of lower-level storage systems are connected in a single-chain mode. Various storage system in the multi-level storage system are connected in a single-chain connection way. In the multi-level storage system of such an architecture, block data in the first-level storage system is unidirectionally migrated.

The at least one lower-level storage system in the previous implementation is a storage system other than the first-level storage system in the multi-level storage system. The migration of at least a part of block data stored in the first-level storage system to a lower-level storage system in the previous implementation can include many migrating ways. For example, at least a part of block data stored in the first-level storage system is migrated to a lower-level storage system connected to the first-level storage system, or at least a part of block data stored in the first-level storage system is migrated to several lower-level storage systems connected to the first-level storage system. Implementations are not limited in the present specification.

The block data in the previous implementation includes all data in a block in the blockchain. When index data established for all data in each block is further set in a blockchain database, the block data further includes the index data corresponding to each block. The index data generally includes content such as a block digest value (hash value) index, a transaction digest value (hash value) index, and a historical transaction status data index that are for each block. The historical transaction status data is a historical value of transaction status in the blockchain, for example, a total balance of a chain account corresponding to a certain block. Therefore, the migration of at least a part of block data described in the present specification can be performed in several ways, for example, all data in at least some blocks in the blockchain can be migrated, or index data corresponding to the at least some blocks can be migrated with the blocks, or a part of index data corresponding to the at least some blocks can be migrated with the blocks. A person skilled in the existing technology can determine a block data migration way in the multi-level storage system based on specific demands. Implementations are not limited in the present specification.

The determining whether a block data migration event for the first-level storage system is triggered in the previous implementation includes: determining whether block data stored in the first-level storage system satisfies a predetermined data migration trigger rule. Specifically, the data migration trigger rule can include the following: A data capacity of the block data stored in the first-level storage system is greater than a predetermined threshold, or a capacity ratio of a data capacity of the block data stored in the first-level storage system to a total data capacity of the first-level storage system exceeds a predetermined threshold. Based on a data type included in the block data, block data used for determining by using the trigger rule can include one or more of total data, transaction digest value data, block digest value data, and historical status data in a block.

For example, whether a total data capacity of an existing block in the blockchain in the first-level storage system exceeds a predetermined threshold is queried. If the total data capacity exceeds the threshold, a migration operation is initiated, and block data stored in the first-level storage system before a migration reference time is migrated to the second-level storage system, where the block data includes total data in each block or total data in each block and index data related to the total data in each block. When the previous migration reference time is a specific block height value, migration of the block data before the block height value can be directly initiated. When the migration reference time is a specific physical time (e.g., a time point or a time stamp), the physical time can be first converted into a specific block height value, then migration of the block data before the block height value is initiated. The block data before the migration reference time includes the total data in each block or the total data in each block and the index data related to the total data in each block, that is, the at least a part of block data described in the previous implementation.

For another example, when related index data is further set in the blockchain database, for the blockchain of which a transaction is a main service form, whether a capacity of the transaction digest value data of the blockchain in the first-level storage system exceeds a threshold or whether a capacity ratio of the transaction digest value data to the total data capacity of the first-level storage system exceeds a predetermined threshold is queried. If the capacity exceeds the threshold, or if the capacity ratio exceeds the threshold, the migration operation is initiated, the block data that is stored in the first-level storage system before the migration reference time is migrated to the second-level storage system. Similarly, other index data in the blockchain database can also be used as a monitoring object set for the migration trigger rule, to monitor a capacity or a capacity ratio of the previous historical status data, to trigger the migration operation.

The previous data migration trigger rule or a migration trigger operation is generally set and executed by a computer program. It can be understood that an execution program in which the data migration trigger rule is set can be arranged in a node device of the blockchain, and monitor storage status of the first-level storage system, so that the execution program is executed based on the migration trigger rule. It is worthwhile to note that when a computer program performs monitoring, responds to a detected migration trigger event for the block data stored in the first-level storage system, and performs a corresponding migration operation, the computer program can invoke a data migration utility program in the blockchain, to migrate at least a part of block data in the first-level storage system to a lower-level storage system of the first-level storage system.

In another implementation, the data migration trigger rule and the migration trigger operation can be determined and manually performed by a user. For example, a user of a node device of the blockchain that the first-level storage system is located actively enters a migration instruction based on the user's understanding and determination of existing status of the first-level storage system. It also can be a node device system of the blockchain invokes some other programs in the system or related smart contract programs to trigger a migration instruction. Implementations are not limited in the present specification.

According to the blockchain data storage method provided in the previous implementations, at least a part of block data in the first-level storage system is migrated to a lower-level storage system in the multi-level storage system under triggering of a related migration trigger event, to release more storage space for the first-level storage system, so that the first-level storage system can better perform various data operations such as a consensus operation, a verification operation, and a read/write operation with high concurrency that are generated in the blockchain. Because of a tamper-resistant characteristic of the blockchain, data that has been recorded in a historical block cannot be deleted or modified, and an operation of adding data to the historical block also cannot be performed. Only a read operation can be performed on block data migrated to a lower-level storage system in the multi-level storage system. Therefore, the previous lower-level storage system can be deployed by using a hardware device resource with a relatively low performance configuration, to reduce costs of the entire storage system.

When the previous multi-level storage system is a single-chain multi-level storage system as shown in FIG. 2 (b), the second-level storage system in the multi-level storage system receives the at least a part of block data migrated from the first-level storage system. A person skilled in the existing technology knows that, after receiving the block data migrated from the upper-level storage system, the second-level storage system needs to confirm whether existing data storage triggers a block data migration event for the second-level storage system because stored data is added. If yes, the second-level storage system also needs to migrate at least a part of block data to a lower-level storage system of the second-level storage system, that is, the third-level storage system. Likewise, after receiving the block data migrated from the upper-level storage system, the third-level storage system needs to confirm whether existing data storage triggers a block data migration event for the third-level storage system because stored data is added. If yes, the third-level storage system also needs to migrate at least a part of block data to a lower-level storage system of the third-level storage system, namely, the fourth-level storage system. Similar processes can be followed by analogy.

Therefore, in another example implementation provided in the present specification, for the multi-level storage system in a single-chain architecture, the blockchain data storage method further includes: determining whether any one of the lower-level storage systems receives the at least a part of block data migrated from the upper-level storage system; if yes, determining whether a block data migration event for the any one of the lower-level storage systems is triggered; and if yes, continuing migrating at least a part of block data stored in the any one of the lower-level storage systems to a lower-level storage system of the any one of the lower-level storage systems.

The triggering a block data migration event for the any one of the lower-level storage systems in the previous implementation is similar to the triggering the block data migration event for the first-level storage system in the previous implementation, and can include the following: A data capacity of block data stored in the any one of the lower-level storage systems is greater than a predetermined threshold, or a capacity ratio of data capacity of block data stored in the any one of the lower-level storage systems to a total data capacity of the any one of the lower-level storage systems is greater than a predetermined threshold. Based on a data type included in the block data, block data used for determining by using a trigger rule can include one or more of total data, transaction digest value data, block digest value data, and historical status data in a block. A process of determining whether a trigger event occurs and migrating at least a part of block data to a lower-level storage system for the any one of the lower-level storage systems is similar to a process of determining whether a trigger event occurs and migrating at least a part of block data to a lower-level storage system for the first-level storage system. Details are omitted here for simplicity.

It is worthwhile to note that in the previous multi-level storage system, block data migration trigger events for each level of storage system can be the same or can be different. For example, values of predetermined thresholds corresponding to the block data migration trigger events for each level of storage system can be the same or can be different. Alternatively, block data migration trigger events for some levels of storage systems are that a data capacity of block data stored in the storage systems is greater than a predetermined threshold, block data migration trigger events for other levels of storage systems are that capacity ratios of block data stored in the storage systems to total data capacities of the some levels of storage systems are greater than a predetermined threshold, and even block data migration trigger events for some levels of storage systems are migration instructions entered by a user. A person skilled in the existing technology can set a corresponding data migration trigger event for each level of the storage system in the multi-level storage system based on a specific data storage demand, to increase adaptability and flexibility of the multi-level storage system provided in the present specification.

Because a blockchain system runs under a corresponding consensus mechanism, data that has been recorded in the blockchain database is difficult to be tampered with by any node. For example, in a blockchain that uses a PoW consensus, existing data may be tampered with by an attack with at least 51% hash rate in the entire network. Therefore, the blockchain system has characteristics of ensuring data security and preventing attack and tampering that other centralized database systems cannot achieve. Because an existing block that has been recorded by various node devices in the blockchain through a consensus cannot be tampered with, and only a read operation can be performed on the existing block, performance of a storage medium corresponding to the lower-level storage system that receives the at least a part of block data migrated from the first-level storage system is lower than performance of the storage medium corresponding to the first-level storage system. Optionally, in the single-chain multi-level storage system shown in FIG. 2 (b), because data in the blockchain is distributed within "blocks" that are connected in terms of time, a relatively long-history data has a lower probability of being read by a user, and storage performance of storage media corresponding to the chained multi-level storage system can decrease in a gradient from the first-level storage system. Historical data in a blockchain can be archived and stored through the previous chained multi-level migration, so that storage resource can be properly allocated, and consensus read/write efficiency of a blockchain system can be improved.

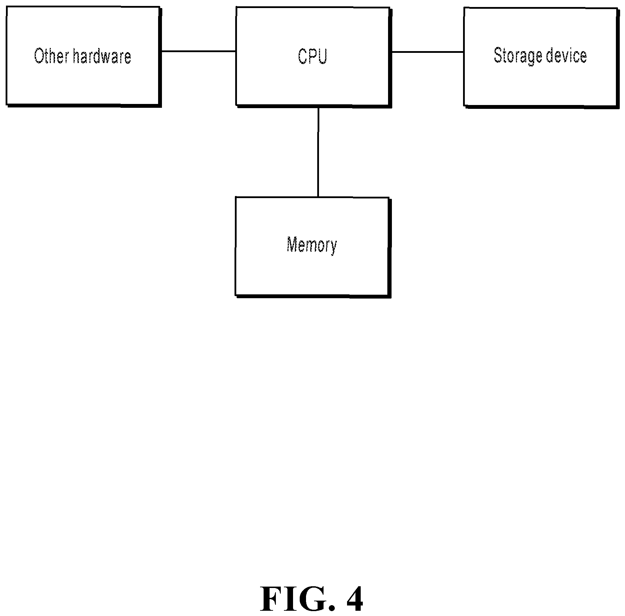

Corresponding to previous procedure implementation, an implementation of the present specification further provides a blockchain data storage apparatus. The apparatus can be implemented by software, can be implemented by hardware, or can be implemented by a combination of hardware and software. Software implementation is used as an example. As a logical apparatus, the software is formed by reading a corresponding computer program instruction in a memory and running the instruction in the memory by a central processing unit (CPU) in a device that the software is located. In terms of hardware, in addition to a CPU, memory, and a storage device shown in FIG. 4, a device in which the blockchain-based data migration apparatus is located generally further includes other hardware such as a chip for sending and receiving radio signals, and/or other hardware such as a card configured to implement a network communication function.

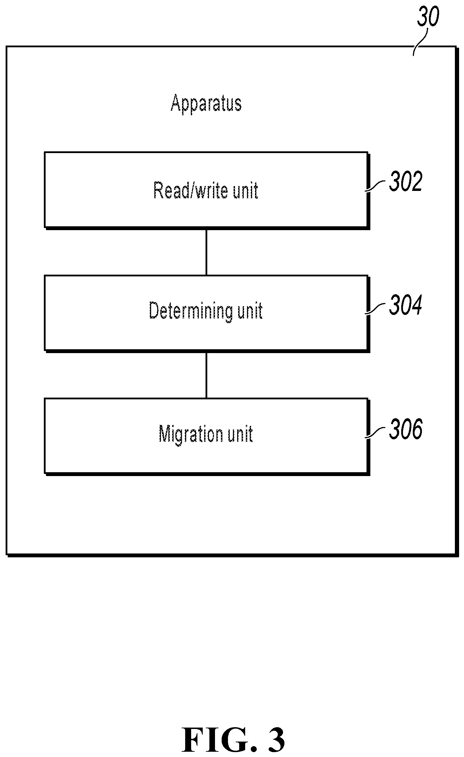

FIG. 3 is a blockchain data storage apparatus 30 provided in the present specification. Block data of the blockchain is stored in a multi-level storage system interconnected to the blockchain, the multi-level storage system includes the first-level storage system configured to store the latest block data of the blockchain, and at least one lower-level storage system configured to archive block data stored in the first-level storage system, and the apparatus 30 includes: a read/write unit 302, configured to receive the latest block data of the blockchain, and store the latest block data in the first-level storage system in the multi-level storage system; a determining unit 304, configured to determine whether a block data migration event for the first-level storage system is triggered; and a migration unit 306, configured to migrate at least a part of block data stored in the first-level storage system to the lower-level storage system if the determining unit determines that the block data migration event for the first-level storage system is triggered.

Preferably, a single-chain connection way is used between various storage systems in the multi-level storage system.

Preferably, storage performance of a storage medium corresponding to the first-level storage system is higher than storage performance of a storage medium corresponding to the lower-level storage system.

Preferably, storage performance of storage media corresponding to various levels of storage systems in the multi-level storage system decreases in a gradient from the first-level storage system.

Preferably, the determining unit is configured to determine whether any one of the lower-level storage systems receives the at least a part of block data migrated from the upper-level storage system; and if yes, determine whether a block data migration event for the any one of the lower-level storage systems is triggered; and the migration unit is configured to continue migrating at least a part of block data stored in the any one of the lower-level storage systems to a lower-level storage system of the any one of the lower-level storage systems if the determining unit of the lower-level storage system determines that the block data migration event for the any one of the lower-level storage systems is triggered.

Preferably, the block data migration event for the first-level storage system includes: a data capacity of the block data stored in the first-level storage system exceeds a predetermined threshold, or a capacity ratio of a data capacity of the block data stored in the first-level storage system to a total data capacity of the first-level storage system exceeds a predetermined threshold.

Preferably, the block data migration event for the any one of the lower-level storage systems includes: a data capacity of block data stored in the any one of the lower-level storage systems exceeds a predetermined threshold, or a capacity ratio of a data capacity of block data stored in the any one of the lower-level storage systems to a total data capacity of the any one of the lower-level storage systems exceeds a predetermined threshold.

For an implementation process of functions and roles of each unit in the apparatus, references can be made to an implementation process of corresponding steps in the previous method. For related parts, references can be made to partial descriptions in the method implementation. Details are omitted here for simplicity.

The previously described apparatus implementation is merely an example. The units described as separate parts may or may not be physically separate, and parts displayed as units may or may not be physical modules, may be located in one position, or may be distributed on several network modules. Some or all of the units or modules can be selected based on actual demands to achieve the objectives of the solutions of the present specification. A person of ordinary skill in the existing technology can understand and implement the implementations of the present specification without creative efforts.

The apparatus and units illustrated in the previous implementations can be implemented by a computer chip or an entity or can be implemented by a product with a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the previous method implementations, an implementation of the present specification further provides a computer device. The computer device includes a storage device and a processor. The storage device stores a computer program that can be run by the processor. When running the stored computer program, the processor performs steps of the blockchain-based data migration method in the implementations of the present specification. For a detailed description of steps of the blockchain-based data migration method, references can be made to the previous content. Details are omitted here.

Corresponding to the previous method implementations, an implementation of the present specification further provides a computer-readable storage medium. The storage medium stores a computer program. When the computer program is run by a processor, steps of the blockchain-based work copyright income distribution method in the implementations of the present specification are performed. For a detailed description of steps of the blockchain-based data migration method, references can be made to the previous content. Details are omitted here.

The previous descriptions are merely example implementations of the present specification but are not intended to limit the present specification.

In a typical configuration, a computing device includes one or more processors (CPU), an input/output interface, a network interface, and a memory.

The memory may include a non-persistent memory, a random access memory (RAM), and/or a non-volatile memory in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data.

Examples of a computer storage medium include but are not limited to a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device. The computer storage medium can be used to store information that can be accessed by the computing device. Based on the description in the present specification, the computer-readable medium does not include transitory computer-readable media (transitory media) such as a modulated data signal and carrier.

It is worthwhile to further note that the terms "include", "contain", or their any other variants are intended to cover a non-exclusive inclusion, so that a process, a method, a product, or a device that includes a list of elements not only includes those elements but also includes other elements that are not expressly listed, or further includes elements inherent to such process, method, product, or device. Without more constraints, an element preceded by "includes a ..." does not preclude the existence of additional identical elements in the process, method, product, or device that includes the element.

A person skilled in the existing technology should understand that an implementation of the present specification can be provided as a method, a system, or a computer program product. Therefore, the implementations of the present specification can use a form of hardware only implementations, software only implementations, or implementations with a combination of software and hardware. Moreover, the implementations of the present specification can use a form of a computer program product that is implemented on one or more computer-usable storage media (including but not limited to a disk memory, a CD-ROM, an optical memory, etc.) that include computer-usable program code.

## Claims

1. A method for multi-level storage of block data, the method comprising:
receiving (102) latest block data of a blockchain;
storing the latest block data in a first-level storage system in a multi-level storage system, wherein block data of the blockchain is stored in the multi-level storage system interconnected to the blockchain and the block data further includes index data corresponding to each respective block data, the multi-level storage system comprising the first-level storage system configured to store the latest block data of the blockchain, and at least one lower-level storage system configured to archive block data stored in the first-level storage system, wherein the at least one lower-level storage system is configured to allow only a read operation on block data migrated to the at least one lower-level storage system, and wherein, for each respective block data, the corresponding index data includes one or more of: a block digest value index, a transaction digest value index, and a historical transaction status data index;
determining (104) whether a block data migration event for the first-level storage system is triggered; and
in response to determining that a block data migration event for the first-level storage system is triggered, migrating (106) at least a part of block data stored in the first-level storage system to the at least one lower-level storage system.

2. The method according to claim 1, wherein a single-chain connection way is used between various storage systems in the multi-level storage system.

3. The method according to claim 1, wherein a first storage performance of a first storage medium corresponding to the first-level storage system is higher than a second storage performance of a second medium corresponding to the lower-level storage system.

4. The method according to claim 2, wherein storage performance of storage media corresponding to various levels of storage systems in the multi-level storage system decreases in a gradient from the first-level storage system.

5. The method according to claim 2, further comprising:
determining whether any one of the lower-level storage systems receives the at least a part of block data migrated from an upper-level storage system;
in response to determining that any one of the lower-level storage systems receives the at least a part of block data migrated from an upper-level storage system, determining whether a block data migration event for any one of the lower-level storage systems is triggered; and
in response to determining that a block data migration event for any one of the lower-level storage systems is triggered, continuing migrating at least a part of block data stored in the any one of the lower-level storage systems to a lower-level storage system of the any one of the lower-level storage systems.

6. The method according to claim 1, wherein the block data migration event for the first-level storage system comprises:
a data capacity of the block data stored in the first-level storage system exceeds a predetermined threshold; or
a capacity ratio of a data capacity of the block data stored in the first-level storage system to a total data capacity of the first-level storage system exceeds a predetermined threshold.

7. The method according to claim 1, wherein the block data migration event for the any one of the lower-level storage systems comprises:
a data capacity of block data stored in the any one of the lower-level storage systems exceeds a predetermined threshold; or
a capacity ratio of a data capacity of block data stored in the any one of the lower-level storage systems to a total data capacity of the any one of the lower-level storage systems exceeds a predetermined threshold.

8. The method according to claim 1, wherein the blockchain comprises a peer-to-peer network.

9. The method according to claim 1, wherein the block data stored in the blockchain is backed up based on a plurality of consensus mechanisms.

10. The method according to claim 9, wherein the plurality of consensus mechanisms comprises a Proof of Work, a Proof of Stake, a Delegated Proof of Stake, or a Practical Byzantine Fault Tolerance.

11. The method according to any one of claims 1 to 10, wherein the historical transaction status data is a historical value of transaction status in the blockchain.

12. The method according to any one of claims 1 to 11, wherein migrating (106) the at least a part of block data stored in the first-level storage system to the at least one lower-level storage system comprises:
migrating all data in at least some data blocks in the blockchain,
migrating index data corresponding to the at least some data blocks with the at least some data blocks, or
migrating a part of index data corresponding to the at least some data blocks with the at least some data blocks.

13. An apparatus (30) for multi-level storage of block data, the apparatus comprising a plurality of modules (302, 304, 306) configured to perform the method of any one of claims 1 to 12.

## Patentansprüche

1. Verfahren zur Mehrebenen-Speicherung von Blockdaten, wobei das Verfahren umfasst:
Empfangen (102) von letzten Blockdaten einer Blockchain;
Speichern der letzten Blockdaten in einem Speichersystem einer ersten Ebene in einem Mehrebenen-Speichersystem, wobei Blockdaten der Blockchain im Mehrebenen-Speichersystem gespeichert werden, das mit der Blockchain verbunden ist, und die Blockdaten ferner Indexdaten umfassen, die jedem jeweiligen Blockdatenelement entsprechen, wobei das Mehrebenen-Speichersystem das Speichersystem der ersten Ebene, das zum Speichern der letzten Blockdaten der Blockchain konfiguriert ist, und mindestens ein Speichersystem einer niedrigeren Ebene umfasst, das zum Archivieren von Blockdaten konfiguriert ist, die im Speichersystem der ersten Ebene gespeichert werden, wobei das mindestens eine Speichersystem einer niedrigeren Ebene so konfiguriert ist, dass es nur einen Lesevorgang an Blockdaten zulässt, die zu dem mindestens einen Speichersystem einer niedrigeren Ebene migriert wurden, und wobei für jedes jeweilige Blockdatenelement die entsprechenden Indexdaten eines oder mehrere umfassen von: einem Blockdigestwertindex, einem Transaktionsdigestwertindex und einem Index historischer Transaktionsstatusdaten;
Bestimmen (104), ob ein Blockdatenmigrationsereignis für das Speichersystem der ersten Ebene ausgelöst wird; und
Migrieren (106) mindestens eines Teils von Blockdaten, der im Speichersystem der ersten Ebene gespeichert ist, zu dem mindestens einen Speichersystem einer niedrigeren Ebene in Reaktion auf ein Bestimmen, dass ein Blockdatenmigrationsereignis für das Speichersystem der ersten Ebene ausgelöst wurde.

2. Verfahren nach Anspruch 1, wobei ein einkettiger Verbindungsweg zwischen verschiedenen Speichersystemen im Mehrebenen-Speichersystem verwendet wird.

3. Verfahren nach Anspruch 1, wobei eine erste Speicherleistung eines ersten Speichermediums, das dem Speichersystem der ersten Ebene entspricht, höher als eine zweite Speicherleistung eines zweiten Mediums ist, das dem Speichersystem einer niedrigeren Ebene entspricht.

4. Verfahren nach Anspruch 2, wobei eine Speicherleistung von Speichermedien, die verschiedenen Ebenen von Speichersystemen im Mehrebenen-Speichersystem entsprechen, einen Gradienten vom Speichersystem der ersten Ebene abnimmt.

5. Verfahren nach Anspruch 2, ferner umfassend:
Bestimmen, ob eines der Speichersysteme niedrigerer Ebenen den mindestens einen Teil von Blockdaten empfängt, der von einem Speichersystem einer höheren Ebene migriert wird;
Bestimmen, ob ein Blockdatenmigrationsereignis für eines der Speichersysteme niedrigerer Ebenen ausgelöst wird, in Reaktion auf ein Bestimmen, dass eines der Speichersysteme niedrigerer Ebenen den mindestens einen Teil von Blockdaten empfängt, der von einem Speichersystem einer höheren Ebene migriert wird; und
Fortfahren in Reaktion auf ein Bestimmen, dass ein Blockdatenmigrationsereignis für eines der Speichersysteme niedrigerer Ebenen ausgelöst wurde, mindestens einen Teil von Blockdaten, der in dem einen der Speichersysteme niedrigerer Ebenen gespeichert ist, zu einem Speichersystem einer niedrigeren Ebene des einen der Speichersysteme niedrigerer Ebenen zu migrieren.

6. Verfahren nach Anspruch 1, wobei das Blockdatenmigrationsereignis für das Speichersystem der ersten Ebene umfasst, dass:
eine Datenkapazität der Blockdaten, die im Speichersystem der ersten Ebene gespeichert sind, eine vorbestimmte Schwelle überschreitet; oder
ein Kapazitätsverhältnis einer Datenkapazität der Blockdaten, die im Speichersystem der ersten Ebene gespeichert sind, zu einer Gesamtdatenkapazität des Speichersystems der ersten Ebene eine vorbestimmte Schwelle überschreitet.

7. Verfahren nach Anspruch 1, wobei das Blockdatenmigrationsereignis für das eine der Speichersysteme niedrigerer Ebenen umfasst, dass:
eine Datenkapazität der Blockdaten, die in dem einen der Speichersystem niedrigerer Ebenen gespeichert sind, eine vorbestimmte Schwelle überschreitet; oder
ein Kapazitätsverhältnis einer Datenkapazität der Blockdaten, die in dem einen der Speichersysteme niedrigerer Ebenen gespeichert sind, zu einer Gesamtdatenkapazität des einen der Speichersysteme niedrigerer Ebenen eine vorbestimmte Schwelle überschreitet.

8. Verfahren nach Anspruch 1, wobei das Blockchain ein Peer-to-Peer-Netzwerk umfasst.

9. Verfahren nach Anspruch 1, wobei die in der Blockchain gespeicherten Blockdaten basierend auf einer Mehrzahl von Konsensmechanismen gesichert werden.

10. Verfahren nach Anspruch 9, wobei die Mehrzahl von Konsensmechanismen Proof of Work, Proof of Stake, Delegated Proof of Stake oder Practical Byzantine Fault Tolerance umfasst.

11. Verfahren nach einem der Ansprüche 1 bis 10, wobei es sich bei den historischen Transaktionsstatusdaten um einen historischen Wert des Transaktionsstatus in der Blockchain handelt.

12. Verfahren nach einem der Ansprüche 1 bis 11, wobei das Migrieren (106) des mindestens einen Teils von Blockdaten, der im Speichersystem der ersten Ebene gespeichert ist, zu dem mindestens einen Speichersystem einer niedrigeren Ebene umfasst:
Migrieren aller Daten in mindestens einigen Datenblöcken in der Blockchain;
Migrieren von Indexdaten, die den mindestens einigen Datenblöcken entsprechen, mit den mindestens einigen Datenblöcken, oder
Migrieren eines Teils von Indexdaten, der den mindestens einigen Datenblöcken entspricht, mit den mindestens einigen Datenblöcken.

13. Vorrichtung (30) für Mehrebenen-Speicherung von Blockdaten, wobei die Vorrichtung eine Mehrzahl von Modulen (302, 304, 306) umfasst, die zum Durchführen des Verfahrens nach einem der Ansprüche 1 bis 12 konfiguriert ist.

## Revendications

1. Procédé de stockage multiniveaux de données de blocs, le procédé comprenant:
la réception (102) des données de blocs les plus récentes d'une chaîne de blocs;
le stockage des données de blocs les plus récentes dans un système de stockage de premier niveau dans un système de stockage multiniveaux, dans lequel les données de blocs de la chaîne de blocs sont stockées dans le système de stockage multiniveaux interconnecté à la chaîne de blocs et les données de blocs comprennent en outre des données d'indice correspondant à chaque donnée de bloc respective, le système de stockage multiniveaux comprenant le système de stockage de premier niveau configuré pour stocker les données de blocs les plus récentes de la chaîne de blocs, et au moins un système de stockage de niveau inférieur configuré pour archiver des données de blocs stockées dans le système de stockage de premier niveau, dans lequel au moins un système de stockage de niveau inférieur est configuré pour autoriser uniquement une opération de lecture sur les données de blocs migrées vers au moins un système de stockage de niveau inférieur et dans lequel, pour chaque donnée de bloc respective, les données d'indice correspondantes comportent une ou plusieurs des données suivantes: un indice de valeur de résumé de bloc, un indice de valeur de résumé de transaction et un indice de données d'état de transaction historiques;
la détermination (104) qu'un événement de migration de données de blocs pour le système de stockage de premier niveau est déclenché ou non; et
en réponse à la détermination qu'un événement de migration de données de blocs pour le système de stockage de premier niveau est déclenché, la migration (106) d'au moins une partie des données de blocs stockées dans le système de stockage de premier niveau vers au moins un système de stockage de niveau inférieur.

2. Procédé selon la revendication 1, dans lequel une voie de connexion à chaîne unique est utilisée entre différents systèmes de stockage dans le système de stockage multiniveaux.

3. Procédé selon la revendication 1, dans lequel une première performance de stockage d'un premier support de stockage correspondant au système de stockage de premier niveau est supérieure à une deuxième performance de stockage d'un deuxième support correspondant au système de stockage de niveau inférieur.

4. Procédé selon la revendication 2, dans lequel les performances de stockage des supports de stockage correspondant aux différents niveaux des systèmes de stockage dans le système de stockage multiniveaux diminuent selon un gradient par rapport au système de stockage de premier niveau.

5. Procédé selon la revendication 2, comprenant en outre:
la détermination que l'un quelconque des systèmes de stockage de niveau inférieur reçoit ou non au moins une partie des données de blocs migrées à partir d'un système de stockage de niveau supérieur;
en réponse à la détermination que l'un quelconque des systèmes de stockage de niveau inférieur reçoit au moins une partie des données de blocs migrées à partir d'un système de stockage de niveau supérieur, la détermination qu'un événement de migration de données de blocs pour l'un des systèmes de stockage de niveau inférieur est déclenché ou non; et
en réponse à la détermination qu'un événement de migration de données de blocs pour l'un quelconque des systèmes de stockage de niveau inférieur est déclenché, la continuation de la migration d'au moins une partie de données de blocs stockées dans l'un quelconque des systèmes de stockage de niveau inférieur vers un système de stockage de niveau inférieur de l'un quelconque des systèmes de stockage de niveau inférieur.

6. Procédé selon la revendication 1, dans lequel l'événement de migration de données de blocs pour le système de stockage de premier niveau comprend:
une capacité de données des données de blocs stockées dans le système de stockage de premier niveau dépasse un seuil prédéterminé; ou
un rapport de capacité d'une capacité de données des données de bloc stockées dans le système de stockage de premier niveau sur une capacité totale de données du système de stockage de premier niveau dépasse un seuil prédéterminé.

7. Procédé selon la revendication 1, dans lequel l'événement de migration de données de blocs pour l'un quelconque des systèmes de stockage de niveau inférieur comprend:
une capacité de données de données de blocs stockées dans l'un quelconque des systèmes de stockage de niveau inférieur dépasse un seuil prédéterminé; ou
un rapport de capacité d'une capacité de données de données de blocs stockées dans l'un quelconque des systèmes de stockage de niveau inférieur sur une capacité totale de données de l'un quelconque des systèmes de stockage de niveau inférieur dépasse un seuil prédéterminé.

8. Procédé selon la revendication 1, dans lequel la chaîne de blocs comprend un réseau pair à pair.

9. Procédé selon la revendication 1, dans lequel les données de blocs stockées dans la chaîne de blocs sont sauvegardées selon une pluralité de mécanismes de consensus.

10. Procédé selon la revendication 9, dans lequel la pluralité de mécanismes de consensus comprend une preuve de travail, une preuve d'enjeu, une preuve d'enjeu déléguée ou une tolérance de défaut byzantine pratique.

11. Procédé selon l'une quelconque des revendications 1 à 10, dans lequel les données d'état de transaction historiques sont une valeur historique de l'état de transaction dans la chaîne de blocs.

12. Procédé selon l'une quelconque des revendications 1 à 11, dans lequel la migration (106) d'au moins une partie des données de blocs stockées dans le système de stockage de premier niveau vers au moins un système de stockage de niveau inférieur comprend:
la migration de toutes les données dans au moins certains blocs de données de la chaîne de blocs,
la migration de données d'indice correspondant aux au moins certains blocs de données avec les au moins certains blocs de données, ou
la migration d'une partie de données d'indice correspondant aux au moins certains blocs de données avec les au moins certains blocs de données.

13. Appareil (30) de stockage multi-niveaux de données de blocs, l'appareil comprenant une pluralité de modules (302, 304, 306) configurés pour réaliser le procédé selon l'une quelconque des revendications 1 à 12.
